# EUROPÄISCHE PATENTSCHRIFT

(11) **EP 2 066 756 B1**
(45) Veröffentlichungstag und Bekanntmachung des Hinweises auf die Patenterteilung: **14.07.2010**
(21) Anmeldenummer: 07820282.7
(22) Anmeldetag: 18.09.2007
(51) Int. Cl.: C09D 7/00, C09D 133/00

(54) **VERWENDUNG VON POLYMERDISPERSIONEN IN BESCHICHTUNGSMASSEN**
USE OF POLYMER DISPERSIONS IN COATING MATERIALS
UTILISATION DE DISPERSIONS DE POLYMÈRES DANS DES MATÉRIAUX DE REVÊTEMENT

(30) Priorität: 20.09.2006 EP 06120935
(43) Veröffentlichungstag der Anmeldung: 10.06.2009
(73) Patentinhaber: BASF SE, 67056 Ludwigshafen (DE)
(72) Erfinder: ROSCHMANN, Konrad, 67069 Ludwigshafen-Edigheim (DE); FISCHER, Gerhard, 67246 Dirmstein (DE)
(86) Internationale Anmeldenummer: PCT/EP2007/059817
(87) Internationale Veröffentlichungsnummer: WO 2008/034816

(56) Entgegenhaltungen:
- EP-A- 0 869 157
- EP-A- 1 398 333
- DE-A1-102004 054 048

## Beschreibung

Die vorliegende Erfindung betrifft die Verwendung von Polymerdispersionen, die Polymerpartikel aufweisen, die intrapartikulär unterschiedlich vernetze Bereiche aufweisen, in Beschichtungsmassen.

DE 10 2004 047526 A1 beschreibt Polymerdispersionen mit verbesserter Frühwasserbeständigkeit, die einen phosphatgruppenhaltigen Emulgator und ein einphasiges, vernetztes Polymer enthalten.

Kern-Schale-Polymere sind vielfältig bekannt, beispielsweise aus EP 710680, WO 03/99949 oder EP 736573.

D. I. Lee beschreibt in Polymer, 46 (2005) 1287 -1293 den Einfluß der Vernetzung in Polymerdispersionen auf die Naßreißfestigkeit. Offenbart wird ein Polymer aus einem Kern von Butylacrylat, Styrol, Acrylsäure und Divinylbenzol und einer Schale aus Butylacrylat, Styrol und Isopropenyloxazolidinon. Dieses System erfordert jedoch als Polymerisationsbedingungen einen pH von 8 - 9 und ist somit nur auf bestimmte Herstellungsbedingungen beschränkt. Ein Einfluß auf die Frühwasserbeständigkeit wird nicht beschrieben.

Aufgabe der vorliegenden Erfindung war es, Beschichtungsmassen zur Verfügung zu stellen, die eine Frühwasserbeständigkeit (early water-spot resistance) aufweisen.

Die Frühwasserbeständigkeit beschreibt die Beständigkeit eines Lacks in nicht vollständig durchgehärtetem Zustand (im Zeitraum 1 bis 3 Stunden nach Applikation bei 20 °C und 60 % relativer Luftfeuchtigkeit) gegen Wasser.

Die Aufgabe wurde gelöst durch die Verwendung von Polymerdispersionen, enthaltend Polymerpartikel, deren Vernetzungsdichte von innen nach außen abnimmt, in Beschichtungsmassen.

Die Vernetzung der Polymere ist möglich durch Ausbildung von kovalenten und/oder nichtkovalenten, beispielsweise koordinativen, ionischen, physikalischen oder salzartigen, Bindungen. Sie kann direkt beim Aufbau der Makromoleküle durch radikalische Polymerisation unter (Mit-)Verwendung von Monomeren mit zwei oder mehr polymerisierbaren Funktionalitäten (vernetzende Copolymerisation) erfolgen. Eine Vernetzung kann aber auch erzeugt werden, wenn auch weniger bevorzugt, durch Reaktionen an vorgebildeten, in der Regel funktionelle Gruppen enthaltenden (Pre-)Polymeren. Diese können Selbstvernetzer sein, d.h. bei Wahl geeigneter Bedingungen miteinander reagieren, oder aber mit zusätzlichen bi- u. polyfunktionellen (niedermolekularen) Reagenzien (Vernetzer) vernetzend umgesetzt werden.

Bevorzugt wird bereits während der Polymerisation mindestens ein Vernetzer zugegeben.

Die Vernetzungsdichte wird im Rahmen dieser Schrift gedanklich entlang der kürzesten Verbindungslinie bestimmt, die von Massenschwerpunkt des betrachteten Polymerteilchens an dessen Oberfläche verläuft.

Der Innenbereich, der erfindungsgemäß eine erhöhte Vernetzungsdichte aufweist, besteht aus einem kugelförmigen Bereich rund um den Massenschwerpunkt des Polymerteilchens, der 20 % des Gesamtvolumens des Polymerteilchens ausmacht. Im Falle einer idealen Kugel wäre dies also etwa das 0,58fache des Gesamtradius.

Der äußere Bereich, der erfindungsgemäß eine gegenüber dem Innenbereich eine verringerte Vernetzungsdichte aufweist, besteht aus einer von der Außenfläche des Polymerteilchens nach innen reichenden Schale, die 20 % des Gesamtvolumens des Polymerteilchens ausmacht. Im Idealfall einer idealen Kugel wäre dies also eine Kugelschale, die den Bereich vom 0,93fachen des Gesamtradius bis zur Außenfläche umfaßt.

Die Abnahme der Vernetzungsdichte vom Innen- zum äußeren Bereich kann in beliebiger Weise erfolgen (siehe unten).

Bei den Polymeren, aus denen die Polymerpartikel aufgebaut sein können, handelt es sich um Polymere, die im wesentlichen aus ethylenisch ungesättigten Verbindungen, bevorzugt aus eine oder mehrere C=C-Doppelbindungen enthaltenden Verbindungen (Monomeren) aufgebaut sind.

Die Polymerisation solcher Monomere erfolgt zumeist anionisch, kationisch oder radikalisch, bevorzugt radikalisch.

Erfindungsgemäß entscheidendes Merkmal ist die in den Polymerpartikeln von innen nach außen abnehmende Vernetzungsdichte. Dies kann häufig , wenn auch nicht immer, durch eine Messung der Glasübergangstemperaturen von Innen- und äußerem Bereich gemessen werden.

Beispielsweise bei relativ geringen Unterschieden der Vernetzungsdichte oder bei einer graduellen Veränderung der Vernetzungsdichte im Verlauf des Radius des Polymerpartikels kann jedoch die Differenz der Glasübergangstemperaturen von Innen- und äußerem Bereich für eine Messung in der Praxis zu klein oder uneindeutig ausfallen.

In einer bevorzugt Ausführungsform unterscheiden sich Innen- und äußerer Bereich zumindest in ihrer gemessenen Glasübergangstemperatur. Eine Berechnung der Glasübergangstemperatur nach bekannten Methoden auf Basis tabellierter Werte für bestimmte Monomere, wie beispielsweise nach Fox, führt nicht notwendigerweise zu unterschiedlichen Glasübergangstemperaturen der Bereiche, beispielsweise wenn Vernetzer als Monomere eingesetzt werden, deren Einfluß auf die Glasübergangstemperatur rechnerisch nicht erfaßt werden kann.

Die Glasübergangstemperatur T_{g}, wird in dieser Schrift bevorzugt bestimmt gemäß ASTM-Vorschrift D3418-03 über Differential Scanning Calorimetry (DSC), bevorzugt mit einer Aufheizrate von 10 °C/min.

Bevorzugt beträgt die Differenz der Glasübergangstemperaturen ΔT_{g} zwischen Innen- und äußerem Bereich bis zu 20 °C, besonders bevorzugt bis zu 15 °C, ganz besonders bevorzugt bis zu 10 °C und insbesondere bis zu 5 °C. Der Innenbereich weist eine höhere Glasübergangstemperatur auf als der äußere Bereich.

Die Glasübergangstemperatur T_{g} der Phase, mit der niedrigeren T_{g}, also der Weichphase, beträgt beispielsweise mindestens 0 °C, bevorzugt mindestens 10 °C, besonders bevorzugt mindestens 15 °C, ganz besonders bevorzugt mindestens 20 °C und insbesondere mindestens 25 °C.

Die Glasübergangstemperatur T_{g} der Phase, mit der höheren T_{g}, also der Hartphase, beträgt beispielsweise bis zu 70 °C, bevorzugt bis zu 60 °C, besonders bevorzugt bis zu 50 °C, ganz besonders bevorzugt bis zu 40 °C und insbesondere bis zu 35 °C.

In Fällen, in denen man die Vernetzungsdichte von Innen- und äußerem Bereich der Polymerpartikel nicht durch eine Messung der Glasübergangstemperatur bestimmen kann, bestimmt das Herstellungsverfahren den erfindungsgemäßen zweistufigen Aufbau: Dazu wird im Herstellverfahren im Verlauf der Polymerisierung der Einbau an vernetzendem Monomer variiert. Dem Fachmann sind Methoden dazu bekannt.

Dies erfolgt bevorzugt durch Polymerisierung von mindestens zwei Zusammensetzungen von Monomeren mit unterschiedlichem Gehalt an vernetzendem Monomer, beispielsweise mit einem im Verlauf der Polymerisierung zunehmenden Gehalt an vernetzendem Monomer, mit einem im Verlauf der Polymerisierung abnehmenden Gehalt an vernetzendem Monomer oder mit einem im Verlauf der Polymerisierung zunehmenden Gehalt an vernetzendem Monomer oder mit einem sich im Verlauf der Polymerisierung verändernden Gehalt an Regler (siehe unten). Wie mit Hilfe der erfindungsgemäßen Beispiele illustriert wird, werden häufig, jedoch nicht immer, die Monomerzusammensetzungen in der Reihenfolge polymerisiert, in der die Zusammengabe erfolgt. Die Reihenfolge des Aufbaus der Polymerphasen kann jedoch auch umgekehrt zur Zugabereihenfolge der Monomerzusammensetzungen erfolgen. Der tatsächliche Aufbau der Polymerphasen ist abhängig von dem Mechanismus des Teilchenwachstums, d.h. ob die Polymerisierung über ein Volumenwachstum oder ein Oberflächenwachstum erfolgt.

Häufig kann im Herstellungsverfahren durch die Geschwindigkeit der Zuläufe der Monomerengemische zur Reaktion die Polymerisierung gesteuert werden: Je langsamer die Geschwindigkeit ist, mit der ein Monomerengemisch in eine Polymerisierung gegeben wird, desto wahrscheinlicher verläuft die Polymerisierung über einen Oberflächenwachstumsmechanismus. Werden die Monomerengemische mit höherer Geschwindigkeit in eine Polymerisierung gegeben, so ist eine Polymerisierung über einen Volumenwachstumsmechanismus wahrscheinlicher. Der Fachmann kann zwischen diesen beiden möglichen Mechanismen mittels einfacher Testversuche unterscheiden und so den für eine bestimmte Monomerzusammensetzung tatsächlich durchlaufenen Mechanismus bestimmen.

Der mittlere Durchmesser der Polymerpartikel in der Dispersion (bestimmt gemäß ISO13321 mit einem High Performance Particle Sizer von der Fa. Malvern bei 22 °C und einer Wellenlänge von 633 nm) beträgt in der Regel mindestens 50 nm, bevorzugt mindestens 70 nm, besonders bevorzugt mindestens 80 nm und ganz besonders bevorzugt mindestens 100 nm. Der mittlere Durchmesser kann in der Regel bis zu 500 nm betragen, bevorzugt bis zu 400 nm, besonders bevorzugt bis zu 350 nm, ganz besonders bevorzugt bis zu 300 nm, insbesondere bis zu 250 nm und speziell bis zu 200 nm.

In einer bevorzugten Ausführungsform der vorliegenden Erfindung nimmt die vernetzerarme Phase, die den äußeren Bereich umfaßt, im Mittel die äußeren 10 bis 40 nm des Gesamtdurchmessers ein, besonders bevorzugt die äußeren 15 bis 30 nm und ganz besonders bevorzugt etwa die äußeren 20 nm des Gesamtdurchmessers der Polymerpartikel.

Innere, höhervernetzte Phase und äußere, vernetzerarme Phase sollten in der Regel im Volumenverhältnis von 10:90 - 80:20, bevorzugt von 10:90 - 70:30, besonders bevorzugt von 15:85 - 60:40, ganz besonders bevorzugt 20:80 - 55:45 und insbesondere von 30: 70 bis 50:50 vorliegen.

In einer bevorzugten Ausführungsform der vorliegenden Erfindung handelt es sich bei den Polymerpartikeln um Kern-Schale-Polymerpartikel.

Die Polymerpartikel sind erfindungsgemäß aus mindestens einem Kern, beispielsweise 1 bis 3, bevorzugt 1 bis 2, besonders bevorzugt genau einem Kern, und mindestens einer Schale, beispielsweise 1 bis 3, bevorzugt 1 bis 2, besonders bevorzugt genau einer Schale, aufgebaut.

Im Falle der Herstellung der Polymerpartikel durch Polymerisieren auf einer Saat erhöht sich die Anzahl der Polymerphasen im Polymerpartikel um die Phase, die ursprünglich die Saat gebildet hat.

Idealerweise umhüllt die äußerste Schale den darunter liegenden Kern vollständig, es ist jedoch im Rahmen der vorliegenden Erfindung ausreichend, wenn die äußerste Schale die Oberfläche des darunter liegenden Kerns überwiegend, d.h. zu mindestens 60%, bevorzugt zu mindestens 70%, besonders bevorzugt zu mindestens 80%, ganz besonders bevorzugt zu mindestens 90% und insbesondere zu mindestens 95% bedeckt.

In einer möglichen Ausführungsform können unterschiedliche Vernetzungsgrade des Innen- und Außenbereichs hergestellt werden, indem im Reaktionsgemisch die Konzentration an Monomeren und Vernetzern weitgehend konstant gelassen wird, jedoch die Menge an Regler (Chain Transfer Agent, Kettenübertragungsmittel) variiert wird.

Durch die Anwesenheit von Reglern in einer Polymerisierung wird durch Kettenabbruch und Start einer Kette durch das so entstandene Radikal in der Regel das Molekulargewicht des entstehenden Polymers verringert und bei Anwesenheit von Vernetzern auch die Anzahl der Vernetzungsstellen (Vernetzungsdichte) verringert. Wird im Verlauf einer Polymerisierung die Konzentration an Regler erhöht, so wird die Vernetzungsdichte im Verlauf der Polymerisierung weiter verringert.

Derartige Molekulargewichtsregler sind bekannt, beispielsweise kann es sich um Mercaptoverbindungen handlen, wie z.B. tertiäres Dodecylmercaptan, dimeres α-Methylstyrol, 2-Ethylhexyl-thioglykolsäureester (EHTG), 3-Mercaptopropyltrimethoxysilan (MTMO) oder Terpinolen. Die Molekulargewichtsregler sind bekannt und beispielsweise beschrieben in Houben-Weyl, Methoden der organischen Chemie, Bd. XIV/1, S. 297 ff., 1961, Stuttgart.

Die Differenz der Vernetzungsgrade des Innen- und Außenbereichs kann bevorzugt durch unterschiedliche Zusammensetzung der Polymere in Innen- und äußerem Bereich hinsichtlich der Vernetzer erzielt werden. Vernetzer, sind im Rahmen dieser Schrift Monomere mit mindestens zwei C=C-Doppelbindungen, die unter den gewählten Polymerisierungsbedingungen reagieren können.

Der Einsatz von Vernetzern führt zu einer Vernetzung der Polymerphase, in der die Vernetzer einpolymerisiert werden.

In einer bevorzugten Ausführungsform der vorliegenden Erfindung weist die Polymerphase, die die äußerste Schale bildet, einen geringeren Gehalt an Vernetzern in einpolymerisierter Form auf, als die unter ihr innen liegende Polymerphase. Besonders bevorzugt nimmt der Gehalt an Vernetzern in einpolymerisierter Form der Polymerphasen von innen nach außen in einem Gradienten ab.

Der Gradient kann beispielsweise linear oder nichtlinear, beispielsweise exponentiell, in einer oder mehreren Stufen, von innen nach außen abnehmend verlaufen, bevorzugt stufenförmig

Jede einzelne Polymerphase der Polymerpartikel kann aufgebaut sein aus
a) 60 bis 99,99 Gew.-%, bevorzugt 75 bis 99,95 Gew.-%, besonders bevorzugt 85 bis 99,8 Gew.-% mindestens eines Hauptmonomeren,
b) 0 bis 40 Gew.-%, bevorzugt 0 bis 25 Gew.-%, besonders bevorzugt aus 0 bis 15 Gew.-% mindestens eines weiteren copolymerisierbaren Monomers und
c) 0,01 bis 3 Gew%, bevorzugt 0,05 bis 1, besonders bevorzugt mindestens 0,2 bis 0,25 Gew% mindestens eines Vernetzers,
mit der Maßgabe, daß die Summe immer 100 Gew% beträgt.

Hauptmonomere a) enthalten genau eine radikalisch polymerisierbare Gruppe und bevorzugt keine weiteren funktionellen Gruppen und sind ausgewählt aus der Gruppe bestehend aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen mit bis zu 20 C-Atomen, Vinylhalogeniden mit bis zu 10 C-Atomen, Vinylethern von 1 bis 10 C-Atome enthaltenden Alkoholen, aliphatischen Kohlenwasserstoffen mit 2 bis 8 C-Atomen oder Mischungen dieser Monomeren.

Zu nennen sind als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pentylester, (Meth)acrylsäure-isopentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Bevorzugt sind (Meth)acrylsäurealkylester mit einem C₁-C₁₀-Alkylrest, besonders bevorzugt Methylmethacrylat, Methylacrylat, n-Butylacrylat, n-Hexylacrylat, n-Octylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester, Vinylbutyrat und Vinylacetat.

Als vinylaromatische Verbindungen kommen Vinyltoluol, Vinylnaphthalin, α- und p-Methylstyrol, α-Butylstyrol, 4-n-Butylstyrol, 4-n-Decylstyrol und vorzugsweise Styrol in Betracht.

Beispiele für ethylenisch ungesättigte Nitrile sind Fumarsäuredinitril, Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Methylvinylether, Ethylvinylether, n-Propylvinylether, iso-Propylvinylether, n-Butylvinylether, sek-Butylvinylether, iso-Butylvinylether, tert-Butylvinylether und n-Octylvinylether. Bevorzugt wird Vinylether von 1 bis 4 C-Atome enthaltenden Alkoholen.

Als aliphatische Kohlenwasserstoffe mit 2 bis 8 C-Atomen sind beispielhaft zu nennen Ethylen, Propylen, 1-Buten, 2-Buten, iso-Buten, 1-Hexen, 1-Octen, Cyclopenten, Cyclohexen, Cyclododecen, Butadien, Isopren und Chloropren.

Als Monomere (a) kommen bevorzugt die Alkyl(meth)acrylate, vorzugsweise (C₂- bis C₁₀-Alkyl)acrylate und -methacrylate und die Vinylaromaten, sowie Mischungen dieser Verbindungen in Betracht.

Ganz besonders bevorzugt sind Monomere (a) ausgewählt aus der Gruppe bestehend aus Methylmethacrylat, n-Butylacrylat, n-Hexylacrylat, Octylacrylat, 2-Ethylhexylacrylat und Styrol sowie Mischungen dieser Monomere.

Weitere copolymerisierbare Monomere b) sind andere Monomere mit genau einer radikalisch polymerisierbaren Gruppe als die unter (a) genannten, bevorzugt solche die neben der radikalisch polymerisierbaren Doppelbindung mindestens eine, bevorzugt 1 bis 3, besonders bevorzugt 1 bis 2 und ganz besonders bevorzugt genau eine weitere funktionelle Gruppe, ausgewählt aus der Gruppe bestehend aus Hydroxygruppen, primären, sekundären, tertiären und quartären Aminogruppen, Carbonsäureamidgruppen und Carboxylgruppen sowie Sulfat-, Sulfonat-, Phosphat-, Phosphonat- oder aldehydreaktive Gruppen, und weniger bevorzugt Epoxy-, Isocyanat-, Hydroxymethyl-, Methoxymethyl- oder Silyloxygruppen.

Insbesondere sind Monomere (b) (Meth)acrylate mit anderen als C₁ - C₂₀-Alkylgruppen, beispielsweise Alkoxyalkyl-, Cycloalkyl- oder C₁-C₁₀-Hydroxyalkyl(meth)acrylate, (Meth)acrylamid, ethylenisch ungesättigte Säuren oder Säureanhydride, insbesondere Carbonsäuren, wie (Meth)acrylsäure, Crotonsäure oder Dicarbonsäuren, z.B. Itaconsäure, Maleinsäure oder Fumarsäure.

(Meth)Acrylsäure steht in dieser Beschreibung für Methacrylsäure und Acrylsäure.

Alkoxyalkyl(meth)acrylate sind beispielsweise (Meth)acrylsäure-2-methoxyethylester, (Meth)acrylsäure-2-ethoxyethylester, (Meth)acrylsäure-4-methoxybutylester und (Meth)acrylsäure-2-(2'-methoxyethoxy-)ethylester.

Beispiele für Monomere (b) mit Carboxylgruppen sind Acrylsäure, Methacrylsäure, Fumarsäure, Fumarsäuremono-iso-propylester, Fumarsäuremono-n-hexylester, Fumarsäureamid, Fumarsäurenitril, Crotonsäure, Itaconsäure, Itaconsäurehalbester, Itaconsäureanhydrid, Citraconsäure, Citraconsäurehalbester, Citraconsäureanhydrid, Bernsteinsäure, Maleinsäure, Maleinsäuremonomethylester, Maleinsäuremonoethylester, Maleinsäuremonobutylester, Maleinsäureanhydrid, Dimethylacrylsäure, Ethacrylsäure, Methylenmalonsäure, Mesaconsäure, Allylessigsäure und Vinylessigsäure.

Hydroxyalkyl(meth)acrylate sind beispielsweise (Meth)acrylsäureformal, (Meth)acrylsäurehydroxymethylester, (Meth)acrylsäure-2-hydroxyethylester, (Meth)acrylsäure-2-hydroxypropylester, (Meth)acrylsäure-3-hydroxypropylester und (Meth)acrylsäure-4-hydroxybutylester ferner möglich sind 4-Hydroxybutylvinylether und N-Methylolmaleinsäureamid.

Weitere Beispiele für Monomere (b) mit verschiedenen funktionellen Gruppen sind (Meth)acrylsäurebenzophenonglycidylester, (Meth)acrylsäureglycidylester, Crotonsäureglycidylester, (Meth)acrylsäure-2-sulfoethylester, Natriumvinylsulfonat, (Meth)acrylamid, Fumarsäurediamid, Maleinsäureamid, Maleinsäurediamid, N-Methylol(meth)acrylamid, Ureido(meth)acrylat, Vinylsuccinimid, Vinylimidazol, 2-Vinylpyridin, 4-Vinylpyridin, N-Vinylpyrrolidon, N-Vinylpiperidon, N-Vinylcaprolactam, Tetraallyloxyethan, Diallylphthalat, Diallylsuccinat, Tetraallylethan, Tetraallyloxysilan, Allylglycidylether, Triallylcyanurat, Triallylisocyanurat, Diketen, Methylvinylketon, 2'-(Acetylacetoxy) ethyl methacrylat, Methacrylsäure 2'-(2"-oxo-imidazolidin-1"-yl)-ethyl ester (Ureido ethyl methacrylat).

Bevorzugte Hilfsmonomere sind Methacrylsäure, Acrylsäure, Acrylamid, (Meth)acrylsäure-2-hydroxyethylester, (Meth)acrylsäure-2-hydroxypropylester, (Meth)acrylsäure-3-hydroxypropylester, (Meth)acrylsäure-4-hydroxybutylester, 4-Hydroxybutylvinylether, Methacrylamid, Itaconsäure, 2'-(Acetylacetoxy) ethyl methacrylat, Methacrylsäure 2'-(2"-oxo-imidazolidin-1 "-yl)-ethyl ester (Ureido ethyl methacrylat), besonders bevorzugt sind Acrylsäure, Itaconsäure, Acrylamid, Methacrylamid, 2'-(Acetylacetoxy) ethyl methacrylat und Methacrylsäure 2'-(2"-oxo-imidazolidin-1 "-yl)-ethyl ester.

Vernetzer c) sind solche, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Bevorzugt sind die radikalisch polymerisierbaren Doppelbindungen ausgewählt aus der Gruppe bestehend aus Acrylat, Methacrylat, Allylether und Allylester.

Die radikalisch polymerisierbaren Gruppen in den Vernetzern können gleich oder verschieden sein, bevorzugt sind sie gleich.

Bevorzugte Allylethergruppen sind Prop-2-en-1-yloxy, 2-Methyl-prop-2-en-1-yloxy und But-2-en-1-yloxy, besonders bevorzugt ist Prop-2-en-1-yloxy.

Bevorzugte Allylestergruppen sind Prop-2-en-1-yloxycarbonyl, 2-Methyl-prop-2-en-1-yloxycarbonyl und But-2-en-1-yloxycarbonyl, besonders bevorzugt ist Prop-2-en-1-yloxycarbonyl.

Bevorzugte acrylische Gruppen sind Acryloyloxy und Methacryloyloxy.

In den Vernetzern c) sind die radikalisch polymerisierbaren Gruppen entweder direkt miteinander verbunden oder bevorzugt durch einen organischen Rest miteinander verbunden.

Dieser organische Rest weist in der Regel 1 bis 20 Kohlenstoffatome auf und kann neben Kohlenstoff und Wasserstoff noch weitere Heteroatome, bevorzugt Sauerstoff, Stickstoff oder Schwefel, besonders bevorzugt Sauerstoff oder Stickstoff und ganz besonders bevorzugt Sauerstoff enthalten.

Bevorzugte Vernetzer mit Allylethergruppen sind die Polyallylether von Trimethylolbutan, Trimethylolpropan, Trimethylolethan, Neopentylglykol, Hydroxypivalinsäureneopentylglykolester, Pentaerythrit, 2-Ethyl-1,3-Propandiol, 2-Methyl-1,3-Propandiol, 2-Ethyl-1,3-Hexandiol, 2,4-Diethyl-oktan-1,3-diol, Glycerin, Ditrimethylolpropan, Dipentaerythrit, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Ethylenglykol, Diethylenglykol, Triethylenglykol, höhere Polyethylenglykole mit einer Molmasse bis zu 2000, Propylenglykol, Dipropylenglykol, Tripropylenglykol, höhere Polypropylenglykole mit einer Molmasse bis zu 2000, 1,3-Propandiol, 1,6-Hexandiol, 1,4-Butandiol, poly-THF mit einer Molmasse bis zu 2000, Sorbit, Mannit, Diglycerol, Threit, Erythrit, Adonit (Ribit), Arabit (Lyxit), Xylit, Dulcit (Galactit), Maltit, Isomalt, Melamin, sowie Ester von Allylalkohol mit Polycarbonsäuren, wie z.B. Phthalsäure, Terephthalsäure, Isophthalsäure, Bernsteinsäure oder Adipinsäure.

Besonders bevorzugt als Vernetzer mit Allylethergruppen sind Trimethylolpropantriallylether, Trimethylolpropandiallylether, Glycerintriallylether, Glycerindiallylether, Ethylenglykoldiallylether, 1,4-Butandioldiallylether, 1,6-Hexandioldiallylether sowie Phthalsäurediallylester.

Bevorzugte Vernetzer mit Allylether und (Meth)Acrylatgruppen sind Allylacrylat, Allylmethacrylat, Methallylacrylat, Methallylmethacrylat, (Meth)Acrylsäure but-3-en-2-ylester, (Meth)Acrylsäure but-2-en-1-ylester, (Meth)Acrylsäure 3-methyl-but-2-en-1-ylester, Ester der (Meth)Acrylsäure mit Geraniol, Citronellol, Zimtalkohol, Glycerinmono- oder -diallylether, Trimethylolpropanmono- oder -diallylether, Ethylenglykolmonoallylether, Diethylenglykolmonoallylether, Propylenglykolmonoallylether, Dipropylenglykolmonoallylether, 1,3-Propandiolmonoallylether, 1,4-Butandiolmonoallylether sowie ferner Itaconsäurediallylester. Weiterhin bevorzugt sind 5-Oxa-hept-6-en-1-yl (meth)acrylat, (Meth)Acrylsäure-3,4-dihydro-2H-pyran-2-ylmethyl ester sowie 2-Hydroxy-but-3-en-1-yl (meth)acrylat.

Besonders bevorzugt sind Allylacrylat und Allylmethacrylat, ganz besonders bevorzugt ist Allylmethacrylat.

Als Beispiele genannt seien für Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat.

Ferner erwähnt sei Divinylbenzol und Butadien.

Besonders bevorzugt sind die Vernetzer ausgewählt aus der Gruppe bestehend aus Divinylbenzol, 1,4-Butandioldiacrylat und Allylmethacrylat und Butadien.

Bevorzugte Polymere sind Styrol-Butadien-Polymere, Polyacrylate, Styrol-Acrylat-Copolymere, Ethylen-Acrylat-Copolymere sowie Vinylester-Acrylat-Copolymere.

Die Polymerdispersionen lassen sich in an sich bekannter Weise nach den allgemein bekannten Verfahren der Emulsionspolymerisation aus den Monomeren unter Verwendung der üblichen Emulgier- und Dispergierhilfsmittel und Polymerisationsinitatoren herstellen.

Als Dispergiermittel für die Durchführung von radikalisch wässerigen Emulsionspolymerisationen kommen üblicherweise eingesetzten Emulgatoren oder Schutzkolloide in Mengen von 0,1 bis 25 Gew.-%, insbesondere von 0,2 bis 10 Gew.-%, bezogen auf die Monomeren, in Betracht.

Weitere gebräuchliche Emulgatoren sind z.B. Alkalimetallsalze höherer Fettalkoholsulfate wie Na-n-Laurylsulfat, ethoxylierte C₈ bis C₁₀-Alkylphenole mit einem Ethoxylierungsgrad von 3 bis 30 sowie ethoxylierte C₈ bis C₂₅-Fettalkohole mit einem Ethoxylierungsgrad von 5 bis 50. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Geeignete Schutzkolloide sind hochmolekulare Naturstoffe wie Stärke, Methylcellulose, Pektine und Gelatine, synthetische Stoffe wie Polyvinylalkohol, Polyvinylpyrrolidon und Copolymerisate aus Acrylsäure, Styrol und weiteren ungesättigten Verbindungen. Weitere Schutzkolloide sind ausführlich in Houben-Weyl, I. c., Seiten 411 bis 420 beschrieben.

Als Polymerisationsinitiatoren kommen alle diejenigen im Betracht, die in der Lage sind, eine radikalische Emulsionspolymerisation in wässerigen Medien auszulösen. Sie werden im allgemeinen in Mengen von 0,1 bis 10 Gew.-%, vorzugsweise von 0,2 bis 4 Gew.-%, bezogen auf die Monomeren, eingesetzt. Übliche Verbindungen sind anorganische Peroxide, z.B. Natrium- und Ammoniumperoxidisulfat und Wasserstoffperoxid, organische Peroxide wie Dibenzoylperoxid oder tert.-Butylhydroperoxid sowie Azoverbindungen wie Azoisobuttersäuredinitril. Diese Initiatoren sind für die bei den radikalischen Emulsionspolymerisationen üblichen Reaktionstemperaturen von 50 bis 100°C geeignet. Werden niedrigere Reaktionstemperaturen von 40 bis 60°C gewünscht, sind Redoxsysteme wie Kombinationen aus Perverbindungen und einem reduzierenden Co-Initiator dem Natriumsalz der Hydroxymethansulfinsäure, Ascorbinsäure oder Eisen-II-salzen vorzuziehen.

Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, I. c., Seiten 133ff).

Besonders bewährt hat sich ein Zulauf-Verfahren, bei dem man von einer Vorlage, bestehend aus einem Teil der Monomeren, im allgemeinen bis zu 20 Gew.-%, Wasser, Emulgator und Initiator ausgeht. Der Rest der Monomeren und gegebenenfalls Regler in emulgierter Form sowie zusätzlich eine wässerige Lösung weiteren Polymerisationsinitiators werden nach Maßgabe der Polymerisation zugesetzt.

In einer bevorzugten Ausführungsform der vorliegenden Erfindung kann die Polymeiriserung durchgeführt werden wie in EP 853 636 oder in US 3804881 beschrieben. Auf die Offenbarung dieser beiden Dokumente sei hiermit durch Referenznahme ausdrücklich Bezug genommen.

Die so erhaltenen wäßrigen Polymerdispersion haben vorzugsweise einen Feststoffgehalt von 35 bis 65, besonders bevorzugt von 45 bis 55 Gew.-%.

Die Polymerdispersionen zeichnet sich durch eine hohe Stabilität aus, es kommt kaum zu Koagulatbildungen.

Die Mindestfilmbildetemperatur (MFT) der erfindungsgemäßen Polymerdispersionen beträgt vorteilhaft weniger als 50 °C.

Die Polymerdispersionen können als Bindemittel für Beschichtungsmassen, z.B. für Lacke, Schutzüberzüge, Straßenmarkierungen, dekorative Überzüge, Anstrichfarben, Beschichtungen auf Textilien, Leder oder Lederersatzstoffen zur Verbesserung der Frühwasserbeständigkeit verwendet werden.

Für die unterschiedliche Verwendung können geeignete Hilfsmittel zugesetzt werden, z.B Verlaufsmittel, Verdicker, Entschäumer, Füllstoffe, Pigmente, und Dispergierhilfsmittel für Pigmente.

Die Beschichtungen können durch Auftragen der Beschichtungsmassen auf geeignete Substrate, wie Holz, Beton, Metall, Glas, Kunststoff, Keramiken, Putze, Stein, Asphalt, Textilien, gestrichene, grundierte oder verwitterte Untergründe erhalten werden.

Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von 3 bis 1000 g/m² und vorzugsweise 10 bis 200 g/m². Anschließend werden die flüchtigen Bestandteile der Dispersionen entfernt. Dieser Vorgang kann gewünschtenfalls ein- oder mehrfach wiederholt werden.

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist. Das Trocknen kann bei einer Temperatur von Umgebungstemperatur bis 100 °C über einen Zeitraum von wenigern Minuten bis mehreren Tagen erfolgen.

Die erhaltene Beschichtungen zeichnen sich in der Regel durch eine gleichmäßige Oberfläche, insbesondere auch durch Blasenfreiheit aus.

Insbesondere eignet sich die erfindungsgemäße Polymerdispersion in einer besonderen Ausführungsform als Bindemittel für Korrosionsschutzlacke und als Bindemittel für Anstrichfarben.

Neben der Polymerdispersion können die Korrosionsschutzlacke noch Korrosionsschutzmittel, wie Korrosionsinhibatoren oder aktive Korrisionsschutzpigmente, z.b. Zinkphosphat enthalten.

Auch ohne weitere Korrosionsschutzmittel hat die erfindungsgemäße Polymerdispersion bereits eine gute Korrosionsschutzwirkung.

Mit den Polymerdispersionen werden zum Korrosionsschutz als Substrate die Oberflächen von Eisen, Stahl, Zn, Zn-Legierungen, Al oder Al-Legierungen behandelt. Die Oberfläche können unbeschichtet sein, mit Zink, Aluminium oder deren Legierungen überzogen sein, feuerverzinkt, galvanisch verzinkt, sherardisiert oder mit Primern vorbeschichtet sein.

Anstrichfarben, auch Dispersionsfarben genannt, sind eine der größten Produktgruppen der Lack- und Farbenindustrie (siehe Ullmanns Enzyklopädie der technischen Chemie, 4. Aufl., Band 15, Verlag Chemie, Weinheim 1978, S. 665). Dispersionsfarben enthalten in der Regel als Bindemittel ein filmbildendes Polymer und als farbgebenden Bestandteil wenigstens ein anorganisches Pigment, ferner anorganische Füllstoffe und Hilfsmittel, wie Entschäumer, Verdicker, Netzmittel und gegebenenfalls Filmbildehilfsmittel.

Eine weitere wichtige Eigenschaft der Polymerdispersionen ist die gute Blockfestigkeit der Anstriche, darunter versteht man eine geringe Verklebung des Anstrichfilms mit sich selbst unter Druckbelastung und erhöhter Temperatur (gute Blockfestigkeit).

Die erfindungsgemäßen Anstrichfarben (Dispersionsfarben) enthalten Pigmente und Füllstoffe vorzugsweise in solchen Mengen, daß die Pigment-Volumen-Konzentration (PVK) 15 % bis 85 % und besonders bevorzugt 25 % bis 55 % beträgt.

Typische Pigmente sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Dispersionsfarben können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, und Siliciumdioxid. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zur Erhöhung der Deckkraft und zur Einsparung von Weißpigmenten werden häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Die unter Verwendung der erfindungsgemäßen Dispersionsfarben hergestellten Anstriche zeichnen sich durch eine hohe Frühwasserbeständigkeit aus.

### Beispiele

### Beschreibung der Testmethode Frühwasserbeständigkeit

Der zu prüfende Lack wurde mit vollentsalztem Wasser auf Spritzviskosität verdünnt und auf ein sandgestrahltes Blech (mittlere Rauhigkeit) mittels Druckluft-Spritzpistole aufgetragen. Das frisch beschichtete Blech wurde ca. 2 Stunden bei Raumtemperatur trocknen gelassen. Die Trockenschichtdicke sollte 90-100 µm betragen. Anschließend kam das Prüfblech in einen mit Leitungswasser gefüllten Behälter. Dabei ist darauf zu achten, dass ca. ¾ des Prüfblechs im Wasser steht. Nach 24 Stunden wurde das Blech herausgenommen und umgehend nach DIN EN ISO 4628 (Bezeichnung des Blasengrades) abgemustert.

Im Blasengrad bezeichnen Prozentangaben den Anteil an blasigen Flächen an der Gesamtfläche und werden angewendet, wenn keine gleichmäßige Blasenbildung zu beobachten war. m bezeichnet die Menge der Blasen auf einer Skala von 1-5 (wenige bis viele). g bezeichnet die Größe der Blasen auf einer Skala von 1-5 (klein bis groß)

### Vergleichsbeispiel 1

Aus 233 g Wasser, 89,0 g einer 20%igen wässrigen Lösung eines teilneutralisierten Phosphorsäurehalbesters eines Fettalkoholethoxylats (Molmasse ca. 1100 g/mol), 407,5 g n-Butylacrylat, 550,0 g Styrol , 25,0 g Acrylsäure, 30,0 g einer 50%igen Acrylamid-Lösung und 2,5 g 1,4-Butandiol-Diacrylat wurde eine Voremulsion hergestellt.

Die Vorlage, bestehend aus 300 g Wasser und 15,0 g obigen teilneutralisierten Phosphorsäurehalbesters (20%ig), wurde in einem Polymerisationsgefäß, welches mit einem Ankerrührer, Rückflusskühler und zwei Zulaufgefäßen ausgestattet war, in einer Stickstoffatmosphäre auf eine Temperatur von 90°C geheizt und nach Zugabe von 66,8 g der Voremulsion sowie 10,4 g einer 2,5%igen Natriumpersulfat-Lösung 15 min anpolymerisiert. Dann wurde der Rest der Voremulsion sowie 198,5 g einer 2,5%igen Natriumpersulfat-Lösung innerhalb von 3 h bei 90°C zudosiert. Nach Zugabe von 62 g Wasser wurde die Reaktionsmischung auf 85°C abgekühlt, anschließend wurden 6,0 g konz. Ammoniak zugegeben und 30 min nachpolymerisiert.

Zur Abreicherung der Restmonomeren wurden dann über einen Zeitraum von 60 min 41,4 g einer 3%igen tert-Butylhydroperoxid-Lösung sowie 40,4 g einer 2,5%igen Ascorbinsäure-Lösung zum Reaktionsgemisch gegeben. Nach abschließender Zugabe von 14,0 g einer 5%igen Wasserstoffperoxid-Lösung sowie 16,4 g konz. Ammoniak wurde die Dispersion auf ca. 30°C abgekühlt und mit 83,3 g einer 43%igen ammoniakalischen Lösung eines Zink-Polyacrylats (Polyacrylat: Mw 4000-5000, SZ 200-300) versetzt.

Daten der Dispersion: Feststoffgehalt: 49,7%, pH-Wert: 9,5, Teilchengröße: 162 nm

### Vergleichsbeispiel 2 (Vernetzer in erster Stufe)

Aus 70,6 g Wasser, 25,5 g einer 20%igen wässrigen Lösung eines teilneutralisierten Phosphorsäurehalbesters eines Fettalkoholethoxylats (Molmasse ca. 1100 g/mol), 123 g n-Butylacrylat, 165 g Styrol , 7,5 g Acrylsäure, 9 g einer 50%igen Acrylamid-Lösung und 1,5 g 1,4-Butandiol-Diacrylat wurde eine erste Voremulsion hergestellt. Aus 70,6 g Wasser, 25,5 g obigen teilneutralisierten Phosphorsäurehalbesters (20%ig), 123 g n-Butylacrylat, 165 g Styrol , 7,5 g Acrylsäure und 9 g einer 50%igen Acrylamid-Lösung wurde eine zweite Voremulsion hergestellt.

Die Vorlage, bestehend aus 194 g Wasser und 9 g obigen teilneutralisierten Phosphorsäurehalbesters (20%ig), wurde in einem Polymerisationsgefäß, welches mit einem Ankerrührer, Rückflusskühler und zwei Zulaufgefäßen ausgestattet war, in einer Stickstoffatmosphäre auf eine Temperatur von 90°C geheizt und nach Zugabe von 50,3 g der ersten Voremulsion sowie 6,3 g einer 2,4%igen Natriumpersulfat-Lösung 15 min anpolymerisiert. Dann wurde der Rest der ersten Voremulsion innerhalb von 90 min sowie im Anschluss daran die zweite Voremulsion innerhalb weiterer 90 min zudosiert. Parallel dazu wurden 118,9 g einer 2,4%igen Natriumpersulfat-Lösung innerhalb von 3 h bei 90°C zugegeben. Nach Zugabe von 37 g Wasser wurde die Reaktionsmischung auf 85°C abgekühlt, anschließend wurden 4,5 g konz. Ammoniak zugegeben und 30 min nachpolymerisiert.

Zur Abreicherung der Restmonomeren wurden dann über einen Zeitraum von 60 min 16,2 g einer 4,5%igen tert-Butylhydroperoxid-Lösung sowie 16,0 g einer 3,8%igen Ascorbinsäure-Lösung zum Reaktionsgemisch gegeben. Nach abschließender Zugabe von 8,4 g einer 5%igen Wasserstoffperoxid-Lösung sowie 12,3 g konz. Ammoniak wurde die Dispersion auf ca. 30°C abgekühlt und mit 50 g einer 43%igen ammoniakalischen Lösung eines Zink-Polyacrylats (Polyacrylat: Mw 4000-5000, SZ 200-300) versetzt.

Daten der Dispersion: Feststoffgehalt: 49,4%, pH-Wert: 9,7, Teilchengröße: 160 nm

### Beispiel 3 (Vernetzer in zweiter Stufe)

Aus 70,6 g Wasser, 25,5 g einer 20%igen wässrigen Lösung eines teilneutralisierten Phosphorsäurehalbesters eines Fettalkoholethoxylats (Molmasse ca. 1100 g/mol), 123 g n-Butylacrylat, 165 g Styrol , 7,5 g Acrylsäure und 9 g einer 50%igen Acrylamid-Lösung wurde eine erste Voremulsion hergestellt. Aus 70,6 g Wasser, 25,5 g obigen teilneutralisierten Phosphorsäurehalbesters (20%ig), 123 g n-Butylacrylat, 165 g Styrol , 7,5 g Acrylsäure, 9 g einer 50%igen Acrylamid-Lösung und 1,5 g 1,4-Butandiol-Diacrylat wurde eine zweite Voremulsion hergestellt.

Die Vorlage, bestehend aus 194 g Wasser und 9 g obigen teilneutralisierten Phosphorsäurehalbesters (20%ig), wurde in einem Polymerisationsgefäß, welches mit einem Ankerrührer, Rückflusskühler und zwei Zulaufgefäßen ausgestattet war, in einer Stickstoffatmosphäre auf eine Temperatur von 90°C geheizt und nach Zugabe von 50,3 g der ersten Voremulsion sowie 6,3 g einer 2,4%igen Natriumpersulfat-Lösung 15 min anpolymerisiert. Dann wurde der Rest der ersten Voremulsion innerhalb von 90 min sowie im Anschluss daran die zweite Voremulsion innerhalb weiterer 90 min zudosiert.

Parallel dazu wurden 118,9 g einer 2,4%igen Natriumpersulfat-Lösung innerhalb von 3 h bei 90°C zugegeben. Nach Zugabe von 37 g Wasser wurde die Reaktionsmischung auf 85°C abgekühlt, anschließend wurden 4,5 g konz. Ammoniak zugegeben und 30 min nachpolymerisiert.

Zur Abreicherung der Restmonomeren wurden dann über einen Zeitraum von 60 min 16,2 g einer 4,5%igen tert-Butylhydroperoxid-Lösung sowie 16,0 g einer 3,8%igen Ascorbinsäure-Lösung zum Reaktionsgemisch gegeben. Nach abschließender Zugabe von 8,4 g einer 5%igen Wasserstoffperoxid-Lösung sowie 12,3 g konz. Ammoniak wurde die Dispersion auf ca. 30°C abgekühlt und mit 50 g einer 43%igen ammoniakalischen Lösung eines Zink-Polyacrylats (Polyacrylat: Mw 4000-5000, SZ 200-300) versetzt.

Daten der Dispersion: Feststoffgehalt: 49,5%, pH-Wert: 9,6, Teilchengröße: 163 nm

Von den so synthetisierten Polymerdispersionen wurde eine Rotlackformulierung hergestellt:
416,6 Gew.teile der zu prüfenden Polymerdispersion (50 %ig) wurden mit 1,9 Gew.teile eines handelsüblichen Entschäumers für Lacke (Mischung von Polysiloxanen und hydrophoben Feststoffen in Polyglykol; BYK^{®} 022, Fa. Byk) und 3,7 Gew.teile oberflächenaktiver Substanz (Surfynol® 104 der Fa. Air Products, 50% in n-Propanol) versetzt, anschließend wurde mittels eines Dispermaten eine Mischung aus 7,5 Gew.teilen Butylglykol, 7,5 Gew.teilen Solvenon®PP und 7,5 Gew.teilen Benzin 180-210°C (Filmbildehilfsmittel) zugegeben. Unter Rühren wurde weiterhin eine Mischung bestehend aus 1,0 Gew.teilen eines anionischen Dispergiermittels (saurer Phosphorsäureester eines Fettalkoholalkoxylates; Lutensit^{®} A-EP, Fa. BASF AG), 2,6 Gew.teilen konz. Ammoniak und 69,3 Gew.teilen Wasser eingearbeitet.
Anschließend wurden 113,3 Gew.teile eines Hämatit-Pigmentes (Bayferrox^{®} 130 M, Fa. Lanxess), 109,8 Gew.teile eines Korrosionsschutzpigmentes (Heucophos^{®} ZPZ, Fa. Heubach), 47,1 Gew.teile Magnesiumsilikat (Füllstoff; Talkum 20 M 2, Fa. Luzenac) sowie 170,4 Gew.teile eines Füllstoffes auf Basis Bariumsulfat und Zinksulfid (30 Gew. % ZnS) (Litopone^{®} L) zugegeben. Die gesamte Mischung wurde für mindestens 30 Minuten mit Glasperlen (⌀ 3mm) dispergiert.
Daraufhin wurden unter weiterem Rühren weitere 1,9 Gew.teile BYK^{®} 022 sowie 5,4 Gew.teile einer 1:1-Mischung aus Wasser und einem handelsüblichen Korrosionsinhibitor (Korrosionsinhibitor L 1, Fa. Erbslöh) zugegeben und die Glasperlen abgesiebt.
Zum Abschluss wurde der Ansatz mit einer 1:1 Mischung eines handelsüblichen Verdickungsmittels auf Urethan-Basis (Collacral® PU 85, Fa. BASF AG) mit Butylglykol (Lösungsmittel) versetzt sowie der pH-Wert des Lackes mit konz. Ammoniak (ca. 27,2 Gew.Teile) auf ca. 9,6 nachgestellt. Man erhält 1000 Gew.teile einer Korrosionsschutz-Grundierung mit ca. 66% Feststoffgehalt und einer Pigment/Volumen-Konzentration (PVK) von 35%.

Mit diesen Formulierungen wurde deren Frühwasserbeständigkeit wie folgt bestimmt:

| Beispiel | Frühwasserbeständigkeit |
|---|---|
| | |
| 1 | m3-4/g2-3 |
| 2 | m2-3/g2-3 |
| 3 | ok |

### Vergleichsbeispiel 4 (kontinuierliche Vernetzung):

Aus 123 g Wasser, 30,2 g einer 31 %igen wässrigen Lösung des Natriumsalzes eines Schwefelsäurehalbesters eines Fettalkoholethoxylats (Ethoxylierungsgrad ca. 30), 18,3 g einer 20%igen wässrigen Lösung eines OH-terminierten Alkylphenolethoxylats (Ethoxylierungsgrad ca. 25), 299 g n-Butylacrylat, 275 g Styrol , 15 g Acrylsäure, 21 g einer 50%igen Acrylamid-Lösung und 1,2 g Allylmethacrylat wurde eine Voremulsion hergestellt.

Die Vorlage, bestehend aus 283 g Wasser und 27 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 11,5 g einer 2,5%igen Natriumpersulfat-Lösung 5 min anpolymerisiert. Dann wurde die Voremulsion sowie 31,7 g einer 2,5%igen Natriumpersulfat-Lösung innerhalb von 3 h bei 85°C zudosiert und abschließend 30 min nachpolymerisiert.

Nach Zugabe von 19 g Wasser sowie 6,3 g konz. Ammoniak wurden dann zur Abreicherung der Restmonomeren über einen Zeitraum von 60 min 10,8 g einer 3,3%igen tert-Butylhydroperoxid-Lösung sowie 10,2 g einer 2,9%igen Ascorbinsäure-Lösung zum Reaktionsgemisch gegeben. Nach abschließender Zugabe von 8,4 g einer 5%igen Wasserstoffperoxid-Lösung sowie 58 g einer 2%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 50,6%, pH-Wert: 9,7, Teilchengröße: 155 nm

### Beispiel 5 (Vernetzer in erster Stufe):

Aus 49,6 g Wasser, 12,4 g einer 31 %igen wässrigen Lösung des Natriumsalzes eines Schwefelsäurehalbesters eines Fettalkoholethoxylats (Ethoxylierungsgrad ca. 30), 7,2 g einer 20%igen wässrigen Lösung eines OH-terminierten Alkylphenolethoxylats (Ethoxylierungsgrad ca. 25), 119,8 g n-Butylacrylat, 109,7 g Styrol , 6,0 g Acrylsäure, 8,4 g einer 50%igen Acrylamid-Lösung und 1,2 g Allylmethacrylat wurde eine erste Voremulsion hergestellt. Aus 74,3 g Wasser, 18,6 g einer 31 %igen wässrigen Lösung obigen Schwefelsäurehalbesters, 10,8 g einer 20%igen wässrigen Lösung obigen nichtionischenAlkylphenolethoxylats, 179,6 g n-Butylacrylat, 164,2 g Styrol , 9,0 g Acrylsäure und 12,6 g einer 50%igen Acrylamid-Lösung wurde eine zweite Voremulsion hergestellt.

Die Vorlage, bestehend aus 283 g Wasser und 27 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 11,5 g einer 2,5%igen Natriumpersulfat-Lösung 5 min anpolymerisiert. Dann wurde die erste Voremulsion innerhalb von 72 min sowie im Anschluss daran die zweite Voremulsion innerhalb weiterer 108 min zudosiert. Parallel dazu wurden 31,7 g einer 2,5%igen Natriumpersulfat-Lösung innerhalb von 3 h bei 85°C zugegeben und abschließend 30 min nachpolymerisiert.

Nach Zugabe von 19 g Wasser sowie 6,3 g konz. Ammoniak wurden dann zur Abreicherung der Restmonomeren über einen Zeitraum von 60 min 10,8 g einer 3,3%igen tert-Butylhydroperoxid-Lösung sowie 10,2 g einer 2,9%igen Ascorbinsäure-Lösung zum Reaktionsgemisch gegeben. Nach abschließender Zugabe von 8,4 g einer 5%igen Wasserstoffperoxid-Lösung sowie 58 g einer 2%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 50,5%, pH-Wert: 9,8, Teilchengröße: 155 nm

### Vergleichsbeispiel 6 (Vernetzer in zweiter Stufe):

Aus 74,3 g Wasser, 18,6 g einer 31 %igen wässrigen Lösung des Natriumsalzes eines Schwefelsäurehalbesters eines Fettalkoholethoxylats (Ethoxylierungsgrad ca. 30), 10,8 g einer 20%igen wässrigen Lösung eines OH-terminierten Alkylphenolethoxylats (Ethoxylierungsgrad ca. 25), 179,6 g n-Butylacrylat, 164,2 g Styrol , 9,0 g Acrylsäure und 12,6 g einer 50%igen Acrylamid-Lösung wurde eine erste Voremulsion hergestellt. Aus 49,6 g Wasser, 12,4 g einer 31%igen wässrigen Lösung obigen Schwefelsäurehalbesters, 7,2 g einer 20%igen wässrigen Lösung obigen nichtionischenAlkylphenolethoxylats, 119,8 g n-Butylacrylat, 109,7 g Styrol , 6,0 g Acrylsäure, 8,4 g einer 50%igen Acrylamid-Lösung und 1,2 g Allylmethacrylat wurde eine zweite Voremulsion hergestellt.

Die Vorlage, bestehend aus 283 g Wasser und 27 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 11,5 g einer 2,5%igen Natriumpersulfat-Lösung 5 min anpolymerisiert. Dann wurde die erste Voremulsion innerhalb von 108 min sowie im Anschluss daran die zweite Voremulsion innerhalb weiterer 72 min zudosiert. Parallel dazu wurden 31,7 g einer 2,5%igen Natriumpersulfat-Lösung innerhalb von 3 h bei 85°C zugegeben und abschließend 30 min nachpolymerisiert.

Nach Zugabe von 19 g Wasser sowie 6,3 g konz. Ammoniak wurden dann zur Abreicherung der Restmonomeren über einen Zeitraum von 60 min 10,8 g einer 3,3%igen tert-Butylhydroperoxid-Lösung sowie 10,2 g einer 2,9%igen Ascorbinsäure-Lösung zum Reaktionsgemisch gegeben. Nach abschließender Zugabe von 8,4 g einer 5%igen Wasserstoffperoxid-Lösung sowie 58 g einer 2%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 49,5%, pH-Wert: 9,6, Teilchengröße: 151 nm

Von den so synthetisierten Polymerdispersionen wurde eine Rotlackformulierung gemäß folgender Rezeptur hergestellt:
393,4 Gew.teile der zu prüfenden Polymerdispersion (50%ig) wurden mit 2,2 Gew.teilen eines handelsüblichen Entschäumers für Lacke (Mischung von Polysiloxanen und hydrophoben Feststoffen in Polyglykol; BYK^{®} 022, Fa. Byk) versetzt, anschließend wurde mittels eines Dispermaten eine Mischung bestehend aus 0,6 Gew.teilen eines anionischen Dispergiermittels (saurer Phosphorsäureester eines Fettalkoholalkoxylates; Lutensit^{®} A-EP, Fa. BASF AG), 11,0 Gew.teilen konz. Ammoniak und 58,6 Gew.teilen Wasser zugegeben. Unter Rühren wurde weiterhin eine Mischung aus 7,2 Gew.teilen Solvenon®PP und 7,2 Gew.teilen Benzin 180-210°C (Filmbildehilfsmittel) eingearbeitet.

Anschließend wurden 85,0 Gew.teile eines Hämatit-Pigmentes (Bayferrox^{®} 130 M, Fa. Lanxess), 82,1 Gew.teile eines Korrosionsschutzpigmentes (Heucophos^{®} ZPZ, Fa. Heubach), 36,0 Gew.teile Magnesiumsilikat (Füllstoff; Talkum 20 M 2, Fa. Luzenac) sowie 127,8 Gew.teile eines Füllstoffes auf Basis Bariumsulfat und Zinksulfid (30 Gew. % ZnS) (Litopone^{®} L) zugegeben. Die gesamte Mischung wurde für mindestens 30 Minuten mit Glasperlen (⌀ 3mm) dispergiert.

Daraufhin wurden unter weiterem Rühren weitere 166,4 Gew.teile der zu prüfenden Polymerdispersion (50%ig) zusammen mit 1,9 Gew.teile BYK^{®} 022 sowie 3,7 Gew.teile einer 1:1-Mischung aus Wasser und einem handelsüblichen Korrosionsinhibitor (Korrosionsinhibitor L 1, Fa. Erbslöh) zugegeben und die Glasperlen abgesiebt.

Zum Abschluss wurde der Ansatz mit einer Mischung aus 3,7 Gew.teilen eines handelsüblichen Verdickungsmittels auf Urethan-Basis (Collacral® PU 85, 25%ig in Butylglykol, Fa. BASF AG) mit 13,2 Gew.teilen Butylglykol (Lösungsmittel) versetzt sowie gegebenenfalls der pH-Wert mit konz. Ammoniak auf ca. 9,5 nachgestellt. Man erhält 1000 Gew.teile einer Korrosionsschutz-Grundierung mit ca. 61% Feststoffgehalt und einer Pigment/Volumen-Konzentration (PVK) von 23%.

Mit diesen Formulierungen wurde deren Frühwasserbeständigkeit wie folgt bestimmt:

| Beispiel | Frühwasserbeständigkeit |
|---|---|
| | |
| 4 | m3-/g2-4 |
| 5 | ok |
| 6 | Keine ausreichende Verfilmung innerhalb von 2h, daher auch keine Prüfung möglich |

### Vergleichsbeispiel 7 (kontinuierliche Vernetzung):

Aus 292 g Wasser, 40,0 g einer 30%igen wässrigen Lösung des Natriumsalzes eines Schwefelsäurehalbesters eines Fettalkoholethoxylats (Ethoxylierungsgrad ca. 30), 30,0 g einer 20%igen wässrigen Lösung eines OH-terminierten Fettalkoholethoxylats (Ethoxylierungsgrad ca. 30), 300 g n-Butylacrylat, 294 g Styrol , 15 g Acrylsäure, 21 g einer 50%igen Acrylamid-Lösung und 1,2 g 1,4-Butandioldiacrylat wurde eine Voremulsion hergestellt.

Die Vorlage, bestehend aus 133 g Wasser und 26 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 4,8 g einer 6,3%igen Natriumpersulfat-Lösung 5 min anpolymerisiert. Dann wurde die Voremulsion sowie 14,3 g einer 6,3%igen Natriumpersulfat-Lösung innerhalb von 3 h bei 85°C zudosiert und abschließend 15 min nachpolymerisiert.

Nach Zugabe von 18 g Wasser sowie 5,4 g konz. Ammoniak wurden dann zur Abreicherung der Restmonomeren über einen Zeitraum von 60 min 7,8 g einer 7,8%igen tert-Butylhydroperoxid-Lösung sowie 16,7 g einer 2,2%igen Ascorbinsäure-Lösung zum Reaktionsgemisch gegeben. Nach abschließender Zugabe von 0,8 g einer 30%igen Wasserstoffperoxid-Lösung sowie 12,4 g einer 15%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 49,8%, pH-Wert: 9,6, Teilchengröße: 149 nm

### Beispiel 8 (Vernetzer in erster Stufe):

Aus 116 g Wasser, 16,0 g einer 30%igen wässrigen Lösung des Natriumsalzes eines Schwefelsäurehalbesters eines Fettalkoholethoxylats (Ethoxylierungsgrad ca. 30), 12,0 g einer 20%igen wässrigen Lösung eines OH-terminierten Fettalkoholethoxylats (Ethoxylierungsgrad ca. 30), 121 g n-Butylacrylat, 109 g Styrol , 6,0 g Acrylsäure, 8,4 g einer 50%igen Acrylamid-Lösung und 0,6 g 1,4-Butandioldiacrylat wurde eine erste Voremulsion hergestellt. Aus 175 g Wasser, 24,0 g einer 30%igen wässrigen Lösung obigen Schwefelsäurehalbesters, 18,0 g einer 20%igen wässrigen Lösung obigen nicht-ionischen Fettalkoholethoxylats, 180 g n-Butylacrylat, 164 g Styrol , 9,0 g Acrylsäure und 12,6 g einer 50%igen Acrylamid-Lösung wurde eine zweite Voremulsion hergestellt.

Die Vorlage, bestehend aus 140 g Wasser und 26 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 4,8 g einer 6,3%igen Natriumpersulfat-Lösung 5 min anpolymerisiert. Dann wurde die erste Voremulsion innerhalb von 72 min sowie im Anschluss daran die zweite Voremulsion innerhalb weiterer 108 min zudosiert. Parallel dazu wurden 14,3 g einer 6,3%igen Natriumpersulfat-Lösung innerhalb von 3 h bei 85°C zugegeben und abschließend 15 min nachpolymerisiert.

Nach Zugabe von 9 g Wasser sowie 5,4 g konz. Ammoniak wurden dann zur Abreicherung der Restmonomeren über einen Zeitraum von 60 min 7,7 g einer 7,8%igen tert-Butylhydroperoxid-Lösung sowie 19,6 g einer 1,8%igen Ascorbinsäure-Lösung zum Reaktionsgemisch gegeben. Nach abschließender Zugabe von 1,4 g einer 30%igen Wasserstoffperoxid-Lösung sowie 61 g einer 3%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 48,9%, pH-Wert: 10,4, Teilchengröße: 139 nm

### Beispiel 9 (Vernetzer in zweiter Stufe):

Aus 175 g Wasser, 24,0 g einer 30%igen wässrigen Lösung obigen Schwefelsäurehalbesters, 18,0 g einer 20%igen wässrigen Lösung obigen nicht-ionischen Fettalkoholethoxylats, 180 g n-Butylacrylat, 164 g Styrol , 9,0 g Acrylsäure und 12,6 g einer 50%igen Acrylamid-Lösung wurde eine erste Voremulsion hergestellt. Aus 116 g Wasser, 16,0 g einer 30%igen wässrigen Lösung des Natriumsalzes eines Schwefelsäurehalbesters eines Fettalkoholethoxylats (Ethoxylierungsgrad ca. 30), 12,0 g einer 20%igen wässrigen Lösung eines OH-terminierten Fettalkoholethoxylats (Ethoxylierungsgrad ca. 30), 121 g n-Butylacrylat, 109 g Styrol , 6,0 g Acrylsäure, 8,4 g einer 50%igen Acrylamid-Lösung und 0,6 g 1,4-Butandioldiacrylat wurde eine zweite Voremulsion hergestellt.

Die Vorlage, bestehend aus 140 g Wasser und 26 g eines 33%igen Polystyrol-Saatlatex (Teilchengröße ca. 30 nm), wurde in einem Polymerisationsgefäß, welches mit einem Ankerrührer, Rückflusskühler und zwei Zulaufgefäßen ausgestattet war, in einer Stickstoffatmosphäre auf eine Temperatur von 85°C geheizt und nach Zugabe von 4,8 g einer 6,3%igen Natriumpersulfat-Lösung 5 min anpolymerisiert. Dann wurde die erste Voremulsion innerhalb von 108 min sowie im Anschluss daran die zweite Voremulsion innerhalb weiterer 72 min zudosiert. Parallel dazu wurden 14,3 g einer 6,3%igen Natriumpersulfat-Lösung innerhalb von 3 h bei 85°C zugegeben und abschließend 15 min nachpolymerisiert.

Nach Zugabe von 9 g Wasser sowie 5,4 g konz. Ammoniak wurden dann zur Abreicherung der Restmonomeren über einen Zeitraum von 60 min 7,7 g einer 7,8%igen tert-Butylhydroperoxid-Lösung sowie 19,6 g einer 1,8%igen Ascorbinsäure-Lösung zum Reaktionsgemisch gegeben. Nach abschließender Zugabe von 1,4 g einer 30%igen Wasserstoffperoxid-Lösung sowie 61 g einer 3%igen Ammoniak-Lösung wurde die Dispersion auf ca. 30°C abgekühlt und mit 63,6 g einer 35%igen ammoniakalischen Lösung eines Zink-Polyacrylats (Polyacrylat: Mw 4000-5000, SZ 200-300) versetzt.

Daten der Dispersion: Feststoffgehalt: 47,3%, pH-Wert: 10,3, Teilchengröße: 135 nm

Von den so synthetisierten Polymerdispersionen wurden Rotlackformulierungen analog der Rezeptur der Beispiele 4 bis 6 hergestellt.

Mit diesen Formulierungen wurde deren Frühwasserbeständigkeit wie folgt bestimmt:

| Beispiel | Frühwasserbeständigkeit |
|---|---|
| 7 | ca. 40%, m4-5/g2-3 |
| 8 | m4/g2-3 |
| 9 | 5 Blasen, g2 |

## Patentansprüche

1. Verwendung von Polymerdispersionen, enthaltend Polymerpartikel, deren Vernetzungsdichte von innen nach außen abnimmt, in Beschichtungsmassen.

2. Verfahren zur Erhöhung der Frühwasserbeständigkeit von Beschichtungen von Substraten, umfassend das Auftragen einer Beschichtungsmasse, enthaltend mindestens eine Polymerdispersion, auf das Substrat und anschließendem Ablüften der flüchtigen Bestandteile, **dadurch gekennzeichnet, daß** die Polymerdispersion Polymerpartikel enthält, deren Vernetzungsdichte von innen nach außen abnimmt.

3. Verwendung gemäß Anspruch 1 und Verfahren gemäß Anspruch 2, **dadurch gekennzeichnet, daß** sich die Bereiche unterschiedlicher Vernetzungsdichte zumindest hinsichtlich ihrer Glasübergangstemperatur unterscheiden, wobei der äußere Bereich eine niedrigere Glasübergangstemperatur als der Innenbereich aufweist.

4. Verwendung und Verfahren gemäß Anspruch 3, **dadurch gekennzeichnet, daß** die Differenz der Glasübergangstemperaturen ΔT_{g} zwischen der Polymeren im Innen- und äußerem Bereich bis zu 20°C gemäß ASTM-Vorschrift D3418-03 beträgt.

5. Verwendung und Verfahren gemäß einem der vorstehenden Ansprüche, **dadurch gekennzeichnet, daß** Glasübergangstemperaturen T_{g} des Polymers der Phase, mit der niedrigeren T_{g}, mindestens 0 °C und bis zu 70 °C gemäß ASTM-Vorschrift D3418-03 beträgt.

6. Verwendung und Verfahren gemäß einem der vorstehenden Ansprüche, **dadurch gekennzeichnet, daß** die Polymerpartikel einen mittleren Durchmesser von mindestens 50 nm und bis zu 500 nm aufweisen.

7. Verwendung und Verfahren gemäß einem der vorstehenden Ansprüche, **dadurch gekennzeichnet, daß** der äußere Bereich die äußeren 10 bis 40 nm des Gesamtdurchmessers der Polymerpartikel ausmacht.

8. Verwendung und Verfahren gemäß einem der vorstehenden Ansprüche, **dadurch gekennzeichnet, daß** im Polymerpartikel innere, höhervernetzte Phase und äußere, vernetzerarme Phase in einem Volumenverhältnis von 10:90 -70:30 verteilt sind.

9. Verwendung und Verfahren gemäß einem der vorstehenden Ansprüche, **dadurch gekennzeichnet, daß** die Polymerpartikel erhältlich sind durch Polymerisierung von mindestens zwei Zusammensetzungen von Monomeren mit unterschiedlichem Gehalt an vernetzendem Monomer, wobei im Verlauf der Polymerisierung der Gehalt an vernetzendem Monomer abnimmt.

10. Verwendung und Verfahren gemäß einem der Ansprüche 1 bis 8, **dadurch gekennzeichnet, daß** die Polymerpartikel erhältlich sind durch Polymerisierung von mindestens zwei Zusammensetzungen von Monomeren mit unterschiedlichem Gehalt an vernetzendem Monomer, wobei im Verlauf der Polymerisierung der Gehalt an vernetzendem Monomer zunimmt.

11. Verwendung und Verfahren gemäß einem der Ansprüche 1 bis 8, **dadurch gekennzeichnet, daß** die Polymerpartikel erhältlich sind durch Polymerisierung von mindestens zwei Zusammensetzungen von Monomeren mit unterschiedlichem Gehalt an vernetzendem Monomer, wobei sich im Verlauf der Polymerisierung der Gehalt an Regler verändert.

12. Verwendung und Verfahren gemäß einem der vorstehenden Ansprüche, **dadurch gekennzeichnet, daß** die Polymerpartikel aufgebaut sind aus
a) 60 bis 99,99 Gew.-% mindestens eines Hauptmonomeren, ausgewählt aus der Gruppe bestehend aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen mit bis zu 20 C-Atomen, Vinylhalogeniden mit bis zu 10 C-Atomen, Vinylethern von 1 bis 10 C-Atome enthaltenden Alkoholen, aliphatischen Kohlenwasserstoffen mit 2 bis 8 C-Atomen oder Mischungen dieser Monomeren,
b) 0 bis 40 Gew.-% weiterer copolymerisierbarer Monomerer und
c) 0,01 bis 3 Gew% mindestens eines Vernetzers, der mindestens zwei radikalisch polymerisierbare Doppelbindungen aufweisen.

13. Verwendung und Verfahren gemäß Anspruch 12, **dadurch gekennzeichnet, daß** Monomere a) ausgewählt sind aus der Gruppe bestehend aus Methylmethacrylat, n-Butylacrylat, n-Hexylacrylat, Octylacrylat, 2-Ethylhexylacrylat und Styrol sowie Mischungen dieser Monomere.

14. Verwendung und Verfahren gemäß Anspruch 12 oder 13, **dadurch gekennzeichnet, daß** Monomere b) ausgewählt sind aus der Gruppe bestehend aus Methacrylsäure, Acrylsäure, Acrylamid, (Meth)acrylsäure-2-hydroxyethylester, (Meth)acrylsäure-2-hydroxypropylester, (Meth)acrylsäure-3-hydroxypropylester, (Meth)acrylsäure-4-hydroxybutylester, 4-Hydroxybutylvinylether, Methacrylamid, Itaconsäure, 2'-(Acetylacetoxy) ethyl methacrylat und Methacrylsäure 2'-(2"-oxo-imidazolidin-1"-yl)-ethyl ester (Ureido ethyl methacrylat).

## Claims

1. The use in a coating composition of a polymer dispersion comprising polymer particles whose crosslinking density decreases from inside to outside.

2. A method of increasing the early water-spot resistance of a coating on a substrate, comprising applying to the substrate a coating composition comprising at least one polymer dispersion and then evaporating the volatiles, wherein the polymer dispersion comprises polymer particles whose crosslinking density decreases from inside to outside.

3. The use according to claim 1 or method according to claim 2, wherein the regions of different crosslinking density differ at least in terms of their glass transition temperature, the outer region having a lower glass transition temperature than the inside region.

4. The use or method according to claim 3, wherein the difference in the glass transition temperatures, ΔT_{g}, between the polymers in the inside and outer region is up to 20°C in accordance with ASTM standard D3418-03.

5. The use or method according to any one of the preceding claims, wherein the glass transition temperature T_{g}, of the polymer of the phase having the lower T_{g}, is at least 0°C and up to 70°C in accordance with ASTM standard D3418-03.

6. The use or method according to any one of the preceding claims, wherein the polymer particles have an average diameter of at least 50 nm and up to 500 nm.

7. The use or method according to any one of the preceding claims, wherein the outer region makes up the outer 10 to 40 nm of the total diameter of the polymer particles.

8. The use or method according to any one of the preceding claims, wherein inner, more highly crosslinked phase and outer, low-crosslinker phase in the polymer particle are distributed in a volume ratio of 10:90 - 70:30.

9. The use or method according to any one of the preceding claims, wherein the polymer particles are obtainable by polymerizing at least two compositions of monomers differing in the amount of crosslinking monomer, the amount of crosslinking monomer decreasing in the course of the polymerization.

10. The use or method according to any one of claims 1 to 8, wherein the polymer particles are obtainable by polymerizing at least two compositions of monomers differing in the amount of crosslinking monomer, the amount of crosslinking monomer increasing in the course of the polymerization.

11. The use or method according to any one of claims 1 to 8, wherein the polymer particles are obtainable by polymerizing at least two compositions of monomers differing in the amount of crosslinking monomer, the amount of regulator changing in the course of the polymerization.

12. The use or method according to any one of the preceding claims, wherein the polymer particles are synthesized from
a) 60% to 99.99% by weight of at least one principal monomer selected from the group consisting of C₁-C₂₀ alkyl (meth)acrylates, vinyl esters of carboxylic acids comprising up to 20 C atoms, vinylaromatics having up to 20 C atoms, ethylenically unsaturated nitriles having up to 20 C atoms, vinyl halides having up to 10 C atoms, vinyl ethers of alcohols comprising 1 to 10 C atoms, aliphatic hydrocarbons having 2 to 8 C atoms, or mixtures of these monomers,
b) 0% to 40% by weight of further, copolymerizable monomers, and
c) 0.01% to 3% by weight of at least one crosslinker, having at least two free-radically polymerizable double bonds.

13. The use or method according to claim 12, wherein monomers a) are selected from the group consisting of methyl methacrylate, n-butyl acrylate, n-hexyl acrylate, octyl acrylate, 2-ethylhexyl acrylate, and styrene, and mixtures of these monomers.

14. The use or method according to Claim 12 or 13, wherein monomers b) are selected from the group consisting of methacrylic acid, acrylic acid, acrylamide, 2-hydroxyethyl (meth)acrylate, 2-hydroxypropyl (meth)acrylate, 3-hydroxypropyl (meth)acrylate, 4-hydroxybutyl (meth)acrylate, 4-hydroxybutyl vinyl ether, methacrylamide, itaconic acid, 2'-(acetylacetoxy)ethyl methacrylate, and 2'-(2"-oxoimidazolidin-1"-yl)ethyl methacrylate (ureidoethyl methacrylate).

## Revendications

1. Utilisation de dispersions de polymères, contenant des particules de polymères dont la densité de réticulation diminue de l'intérieur vers l'extérieur, dans des masses de revêtement.

2. Procédé pour augmenter la résistance à l'eau de condensation de revêtements de substrats, comprenant l'application d'une masse de revêtement contenant au moins une dispersion de polymères, sur le substrat et l'évaporation consécutive des constituants volatils, **caractérisé en ce que** la dispersion de polymères contient des particules de polymères dont la densité de réticulation diminue de l'intérieur vers l'extérieur.

3. Utilisation selon la revendication 1 et procédé selon la revendication 2, **caractérisé(e) en ce que** les zones de densité de réticulation différente se distinguent au moins en ce qui concerne leur température de transition vitreuse, la zone extérieure présentant une température de transition vitreuse inférieure à celle de la zone intérieure.

4. Utilisation et procédé selon la revendication 3, **caractérisé(e) en ce que** la différence des températures de transition vitreuse ΔT_{g} entre les polymères dans la zone intérieure et extérieure est de jusqu'à 20°C selon la spécification ASTM D3418-03.

5. Utilisation et procédé selon l'une quelconque des revendications précédentes, **caractérisé(e) en ce que** les températures de transition vitreuse T_{g} du polymère de la phase présentant la T_{g} la plus basse est d'au moins 0°C et jusqu'à 70°C selon la spécification ASTM D3418-03.

6. Utilisation et procédé selon l'une quelconque des revendications précédentes, **caractérisé(e) en ce que** les particules polymères présentent un diamètre moyen d'au moins 50 nm et jusqu'à 500 nm.

7. Utilisation et procédé selon l'une quelconque des revendications précédentes, **caractérisé(e) en ce que** la zone extérieure représente les 10 à 40 nm extérieurs du diamètre total des particules de polymères.

8. Utilisation et procédé selon l'une quelconque des revendications précédentes, **caractérisé(e) en ce que** dans les particules de polymères, la phase intérieure hautement réticulée et la phase extérieure, peu réticulée, sont réparties dans un rapport volumique de 10:90-70:30.

9. Utilisation et procédé selon l'une quelconque des revendications précédentes, **caractérisé(e) en ce que** les particules polymères peuvent être obtenues par polymérisation d'au moins deux compositions de monomères avec une teneur différente en monomère réticulant, la teneur en monomère réticulant diminuant au cours de la polymérisation.

10. Utilisation et procédé selon l'une quelconque des revendications 1 à 8, **caractérisé(e) en ce que** les particules polymères peuvent être obtenues par polymérisation d'au moins deux compositions de monomères avec une teneur différente en monomère réticulant, la teneur en monomère réticulant augmentant au cours de la polymérisation.

11. Utilisation et procédé selon l'une quelconque des revendications 1 à 8, **caractérisé(e) en ce que** les particules polymères peuvent être obtenues par polymérisation d'au moins deux compositions de monomères avec une teneur différente en monomère réticulant, la teneur en agent de régulation étant modifiée au cours de la polymérisation.

12. Utilisation et procédé selon l'une quelconque des revendications précédentes, **caractérisé(e) en ce que** les particules polymères sont constituées par
a) 60 à 99,99% en poids d'au moins un monomère principal, choisi dans le groupe constitué par les (méth)acrylates de C₁-C₂₀-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés comprenant jusqu'à 20 atomes de carbone, les halogénures de vinyle comprenant jusqu'à 10 atomes de carbone, les vinyléthers d'alcools contenant 1 à 10 atomes de carbone, les hydrocarbures aliphatiques comprenant 2 à 8 atomes de carbone ou des mélanges de ces monomères.
b) 0 à 40% en poids d'autres monomères copolymérisables et
c) 0,01 à 3% en poids d'au moins un réticulant qui présente au moins deux doubles liaisons polymérisables par voie radicalaire.

13. Utilisation et procédé selon la revendication 12, **caractérisé(e) en ce que** les monomères a) sont choisis dans le groupe constitué par le méthacrylate de méthyle, l'acrylate de n-butyle, l'acrylate de n-hexyle, l'acrylate d'octyle, l'acrylate de 2-éthylhexyle et le styrène ainsi que les mélanges de ces monomères.

14. Utilisation et procédé selon la revendication 12 ou 13, **caractérisé(e) en ce que** les monomères b) sont choisis dans le groupe constitué par l'acide méthacrylique, l'acide acrylique, l'acrylamide, l'ester 2-hydroxyéthylique de l'acide (méth)acrylique, l'acide 2-hydroxypropylique de l'acide (méth)acrylique, l'acide 3-hydroxypropylique de l'acide (méth)acrylique, l'ester 4-hydroxybutylique de l'acide (méth)acrylique, le 4-hydroxybutylvinyléther, le méthacrylamide, l'acide itaconique, le méthacrylate de 2'-(acétylacétoxy)éthyle et l'ester 2'-(2"-oxoimidazolidin-1"-yl)-éthylique de l'acide méthacrylique (méthacrylate d'uréidoéthyle).
